# EUROPÄISCHE PATENTSCHRIFT

(11) **EP 3 683 094 B1**
(45) Veröffentlichungstag und Bekanntmachung des Hinweises auf die Patenterteilung: **11.08.2021**
(21) Anmeldenummer: 19151884.4
(22) Anmeldetag: 15.01.2019
(51) Int. Cl.: B60P 3/07

(54) **FAHRZEUGTRANSPORTER MIT STAPELVORRICHTUNG**
VEHICLE CARRIER WITH STACKING DEVICE
TRANSPORTEUR DE VÉHICULE À DISPOSITIF D'EMPILEMENT

(43) Veröffentlichungstag der Anmeldung: 22.07.2020
(73) Patentinhaber: Kässbohrer Transport Technik GmbH, 5301 Eugendorf (AT)
(72) Erfinder: GRUBER, Robert, 5201 Seekirchen (AT)
(74) Vertreter: Torggler & Hofinger Patentanwälte

(56) Entgegenhaltungen:
- EP-A1- 1 676 792
- CN-U- 203 528 368
- DE-U1-202006 004 291
- US-A- 3 993 342

## Beschreibung

Die Erfindung betrifft einen Fahrzeugtransporter mit den Merkmalen des Oberbegriffs des Anspruchs 1. Ein solcher Fahrzeugtransporter ist aus der CN 203 528 368 U bekannt.

Es sind Fahrzeugtransporter bekannt geworden, welche mit einer Stapelvorrichtung zum Stapeln eines Fahrzeugs auf dem Fahrzeugtransporter versehen sind, wobei die Stapelvorrichtung eine Radabstützung zur Abstützung der Räder nur einer Achse eines mehrspurigen Fahrzeuges aufweist und Räder einer anderen Achse des mehrspurigen Fahrzeuges auf einer Fahrbahn des Fahrzeugtransporters aufstellbar sind. Die Radabstützung weist quer zu einer Breite der Fahrbahn einen Abstützbereich auf.

Die Stapelvorrichtung weist eine Schwenkhebevorrichtung zum Heben und Senken der Radabstützung relativ zur Fahrbahn mittels einer Schwenkbewegung auf. Die Radabstützung kann durch die Schwenkhebevorrichtung zwischen einer Aufnahmeposition für die Räder einer Achse des zu stapelnden Fahrzeugs (ggf. nachdem sie aus einer Ablageposition in diese angehoben wurde) und einer relativ zu dieser angehobenen Ladeposition bewegt werden. Die sich bei maximaler Verschwenkung ergebende Höhe relativ zur Fahrbahn wird als Hubhöhe H bezeichnet. Beim Heben und Senken der Radabstützung kommt es zu einem Verschwenken der Radabstützung relativ zur Fahrbahn. Dabei kommt es zu einem unerwünschten Drehversatz zwischen Radabstützung und Fahrzeug, wodurch das Rad des Fahrzeugs unkontrolliert gedreht wird und es zu einer Beschädigung des Radhauses des zu stapelnden Fahrzeuges kommen kann. Aufgabe der Erfindung ist die Bereitstellung eines gattungsgemäßen Fahrzeugtransporters, bei welchem die Gefahr einer Beschädigung des Radhauses des zu stapelnden Fahrzeuges reduziert ist.

Diese Aufgabe wird durch einen Fahrzeugtransporter mit den Merkmalen des Anspruchs 1 gelöst.

Die Schwenkhebevorrichtung weist einen Hubarm und einen Koppelarm auf, welche einerseits an der Fahrbahn und andererseits an der Radabstützung an in Form eines Gelenk-Vierecks angeordneten Schwenkpunkten schwenkbar gelagert sind. Durch das Vorsehen des Gelenk-Vierecks kommt es zu einer Zwangsführung der Radabstützung während des Schwenkhebevorgangs. Es kann dadurch verhindert werden, dass die Schwenkbewegung der Schwenkhebevorrichtung vollständig oder im Wesentlichen vollständig auf die Radabstützung übertragen wird. Durch die Zwangsführung kann die Schwenkbewegung der Schwenkhebevorrichtung zumindest teilweise kompensiert oder überkompensiert werden, in dem Sinn, dass die die Radabstützung eine von der Schwenkbewegung der Schwenkhebevorrichtung abweichende Kippbewegung relativ zur Fahrbahn des Fahrzeugtransporters durchführt. Würde die Schwenkbewegung der Schwenkhebevorrichtung gänzlich unkompensiert auf die Radabstützung übertragen werden (beispielsweise durch eine starre Verbindung), so würde die Radabstützung stets die gleiche Neigung aufweisen, wie der Hubarm der Schwenkhebevorrichtung. Bei einer teilweisen Kompensation der Schwenkbewegung der Schwenkhebevorrichtung kann die Radabstützung eine geringere Neigung aufweisen als der Hubarm der Schwenkhebevorrichtung.

Bei einer vollständigen Kompensation der Schwenkbewegung der Schwenkhebevorrichtung kann die Radabstützung in angehobenem Zustand in einer vorgebbaren Schwenkstellung der Schwenkhebevorrichtung die gleiche Neigung aufweisen, wie etwa in deren Aufnahmeposition oder Ablageposition. Es ist auch denkbar, dass die Radabstützung während der Schwenkbewegung der Schwenkhebevorrichtung eine konstante Neigung aufweist. Bei einer Überkompensation der Schwenkhebevorrichtung kann die Radabstützung in einer vorgebbaren Schwenkstellung eine geringere Neigung aufweisen, wie in deren Aufnahmeposition oder Ablageposition. In anderen Worten gesagt, kann eine Überkompensation der Schwenkbewegung der Schwenkhebevorrichtung bedeuten, dass die Kippbewegung der Radabstützung gegensinnig zum Verschwenken des Hubarms der Schwenkvorrichtung verläuft.

Vorteilhafte Ausführungsformen der Erfindung sind in den abhängigen Ansprüchen definiert.

Das Ausmaß der Kippbewegung kann durch die nachstehenden Parameter des Gelenk-Vierecks vorgegeben werden:
- direkter Abstand d₁ zwischen den mittels des Hubarms miteinander verbundenen Schwenkpunkten
- direkter Abstand d₂ zwischen den mittels des Koppelarms miteinander verbundenen Schwenkpunkten
- direkter Abstand d_{V} zwischen den an der Fahrbahn angeordneten Schwenkpunkten
- direkter Abstand d_{R} zwischen den an der Radabstützung angeordneten Schwenkpunkten

Beispielsweise ergibt sich
- für eine gewünschte Hubhöhe H und
- für eine gewünschte Position X_{L} der Radabstützung in einer Längserstreckung der Fahrbahn relativ zur Fahrbahn in der Hubhöhe H und
- für eine gewünschte Position des Schwenklagers des Hubarms an der Fahrbahn
ein bestimmter direkter Abstand d₁ zwischen den mittels des Hubarms miteinander verbundenen Schwenkpunkten.

Gibt man weiters die folgenden Parameter vor:
- direkter Abstand d_{V} zwischen den an der Fahrbahn angeordneten Schwenkpunkten
- direkter Abstand d_{R} zwischen den an der Radabstützung angeordneten Schwenkpunkten
- gewünschtes Ausmaß für die Kippbewegung der Radabstützung ausgehend von der Aufnahmeposition zu einer gewünschten Ladeposition
ergibt sich der direkte Abstand d₂ zwischen den mittels des Koppelarms miteinander verbundenen Schwenkpunkten.

Die Wahl der direkten Abstände d_{V} und d_{R} erfolgt z. B. in Abhängigkeit von baulichen Gegebenheiten (z. B. zur Verfügung stehender Bauraum des Fahrzeugtransporters) und gewünschter mechanischer Stabilität des Gelenk-Vierecks.

Bei einem Ausführungsbeispiel der Erfindung ist vorgesehen, dass die an der Fahrbahn gelagerten Schwenkpunkte in unterschiedlicher Höhe relativ zur Fahrbahn angeordnet sind. So kann beispielsweise von der Fahrbahn aus gesehen der an der Fahrbahn gelagerte Schwenkpunkt des Koppelarms oberhalb des Schwenkpunkts des Hubarms liegen. Dies kann gemeinsam mit der Wahl der Länge des Koppelarms dazu beitragen, dass die Schwenkbewegung der Schwenkhebevorrichtung überkompensiert wird. Durch eine solche Lage des Schwenkpunkts des Koppelarms kann es ermöglicht werden, dass die Länge des Koppelarms geringer ausfällt, als die Länge des Hubarms.

Bei einem Ausführungsbeispiel der Erfindung ist vorgesehen, dass die Stapelvorrichtung eine Verstellvorrichtung zum Längspositionieren der Radabstützung relativ zur Fahrbahn des Fahrzeugtransporters aufweist und dass die an der Fahrbahn gelagerten Schwenkpunkte der Schwenkhebevorrichtung an der Verstellvorrichtung angeordnet und so über die Verstellvorrichtung an der Fahrbahn gelagert sind. Durch eine solche Stellvorrichtung kann zusätzlich zur Hubbewegung durch die Schwenkhebevorrichtung (und gegebenenfalls zusätzlich zu einer durch die Schwenkhebevorrichtung bedingte Längsbewegung) eine Längsbewegung eines durch die Stapelvorrichtung zu stapelnden Fahrzeugs durchgeführt werden. Auch kann sich dadurch eine gewünschte Aufnahmeposition oder Ablageposition und eine Position in der Hubhöhe der Radabstützung in einer Längserstreckung der Fahrbahn einstellen lassen. Durch eine Anordnung der an der Fahrbahn gelagerten Schwenkpunkte der Schwenkhebevorrichtung an der Verstellvorrichtung kann es ermöglicht werden, die anhebbare oder angehobene Radabstützung gemeinsam mit der Schwenkhebevorrichtung relativ zur Fahrbahn des Fahrzeugtransporters in Längsrichtung zu positionieren. Durch eine Verstellvorrichtung kann die Position in Längsrichtung der Fahrbahn eines zu stapelnden Fahrzeugs verändert werden, ohne vom Antrieb des zu stapelnden Fahrzeugs Gebrauch machen zu müssen.

Dabei kann die Verstellvorrichtung zum Längspositionieren getrennt von der Schwenkhebevorrichtung betätigbar sein, d.h. eine Längspositionierung eines zu stapelnden Fahrzeugs durch die für Stellvorrichtung kann unabhängig von der Hubbewegung durch die Schwenkhebevorrichtung erfolgen.

Bei einem Ausführungsbeispiel der Erfindung ist vorgesehen, dass die Verstellvorrichtung einen durch eine Antriebsvorrichtung bewegbaren Schlitten aufweist, an welchem die an der Fahrbahn gelagerten Schwenkpunkte der Schwenkhebevorrichtung angeordnet sind. Bei der Antriebsvorrichtung kann es sich um einen zwischen der Fahrbahn und dem Schlitten angeordneten Hydraulikzylinder oder Spindeltrieb handeln. Der Schlitten kann in einer an der Fahrbahn des Fahrzeugtransporters angeordneten Führung, beispielsweise einer Kulissenführung, verschiebbar gelagert sein. Durch die Anordnung der an der Fahrbahn gelagerten Schwenkpunkte der Schwenkhebevorrichtung am Schlitten kann die gesamte Schwenkhebevorrichtung relativ zur Fahrbahn des Fahrzeugtransporters in Längsrichtung positionierbar gemacht werden.

Bei einem Ausführungsbeispiel der Erfindung ist vorgesehen, dass die Verstellvorrichtung eine Bewegungsvorrichtung für den Hubarm aufweist. Dadurch kann bei einem Verstellen der Längsposition der Schwenkhebevorrichtung deren durch die Stellung des Hubarms bedingte Hubhöhe beibehalten werden, da die Bewegungsvorrichtung für den Hubarm in gleicher Weise in Längsrichtung mitverstellt wird. Die Bewegungsvorrichtung für den Hubarm kann beispielsweise in Form eines Hydraulikzylinders, insbesondere in Form eines verriegelbaren (arretierbaren) Hydraulikzylinders, oder in Form eines Spindelantriebs ausgeführt sein. Die Bewegungsvorrichtung für den Hubarm ist bevorzugt am Schlitten gelagert.

Bei einem Ausführungsbeispiel der Erfindung ist vorgesehen, dass die Verstellvorrichtung außerhalb der Breite des Abstützbereichs der Radabstützung am Fahrzeugtransporter angeordnet ist. Dadurch kann es möglich sein, dass vor und hinter der Radabstützung die Fahrbahn in Längsrichtung frei von störenden (die Befahrbarkeit beeinträchtigenden) Teilen der Verstellvorrichtung gehalten wird. Auch kann es dadurch möglich sein, dass der Bereich zwischen der Fahrbahn und der Radabstützung frei von störenden Teilen der Verstellvorrichtung gehalten wird, wodurch sich dieser Bereich auch als Laderaum nutzen lassen kann. Weiter kann dadurch vermieden werden, dass Teile der Verstellvorrichtung die erreichbare Breite des Abstützbereichs limitieren. Die erreichbare Breite der Radabstützung kann somit im Wesentlichen der befahrbaren Breite der Fahrbahn des Fahrzeugtransporters entsprechen. Dabei kann auch möglich sein, dass die Stellvorrichtung außerhalb der befahrbaren Breite der Fahrbahn des Fahrzeugtransporters angeordnet ist.

Bei einem Ausführungsbeispiel der Erfindung ist vorgesehen, dass die Schwenkhebevorrichtung außerhalb der Breite des Abstützbereichs der Radabstützung am Fahrzeugtransporter angeordnet sind. Dadurch kann es möglich sein, dass vor und hinter der Radabstützung die Fahrbahn in Längsrichtung frei von störenden (die Befahrbarkeit beeinträchtigenden) Teilen der Schwenkhebevorrichtung gehalten wird. Auch kann es dadurch möglich sein, dass der Bereich zwischen der Fahrbahn und der Radabstützung frei von störenden Teilen der Schwenkhebevorrichtung gehalten wird, wodurch sich dieser Bereich auch als Laderaum nutzen lassen kann. Weiter kann dadurch vermieden werden, dass Teile der Schwenkhebevorrichtung die erreichbare Breite des Abstützbereichs limitieren. Die erreichbare Breite der Radabstützung kann somit im Wesentlichen der befahrbaren Breite der Fahrbahn des Fahrzeugtransporters entsprechen. Dabei kann auch möglich sein, dass die Schwenkhebevorrichtung außerhalb der befahrbaren Breite der Fahrbahn des Fahrzeugtransporters angeordnet ist.

In einer besonders vorteilhaften Ausführung sind die Verstellvorrichtung und die Schwenkhebevorrichtung außerhalb der Breite des Abstützbereichs der Radabstützung am Fahrzeugtransporter angeordnet.

Bevorzugt kann vorgesehen sein, dass an beiden Seiten des Fahrzeugtransporters jeweils eine Schwenkhebevorrichtung und ggf. eine Verstellvorrichtung angeordnet sind, welche über die Radabstützung mechanisch miteinander gekoppelt sind.

Bei einem Ausführungsbeispiel der Erfindung ist vorgesehen, dass der Hubarm eine Kröpfung aufweist. Es ist auch denkbar, dass der Koppelarm eine Kröpfung aufweist. Durch eine Kröpfung kann beispielsweise für die Ablageposition eine Anpassung des Hubarms und/oder Koppelarms an den Verlauf der Fahrbahn erfolgen. Die Kröpfung kann beispielsweise für eine Ablageposition des Hubarms und/oder Koppelarms im Bereich eines Radhauses des Fahrzeugtransporters an die Kontur des Radhauses angepasst sein.

Bei einem Ausführungsbeispiel der Erfindung ist vorgesehen, dass der Koppelarm und/oder der Hubarm längenveränderbar ausgebildet sind bzw. ist, vorzugsweise in Form eines Hydraulikzylinders oder in Form eines Spindelantriebs. Durch eine Längenveränderbarkeit des Koppelarms und/oder des Hubarms kann der direkte Abstand d1 zwischen den mittels des Hubarms miteinander verbundenen Schwenkpunkten und/oder der direkte Abstand d2 zwischen den mittels des Koppelarms miteinander verbundenen Schwenkpunkten verändert werden. Dadurch kann das Ausmaß der Kippbewegung der Radabstützung, die gewünschte Hubhöhe H, die gewünschte Position XL der Radabstützung in einer Längserstreckung der Fahrbahn relativ zur Fahrbahn in der Hubhöhe H und die Lage der Aufnahmeposition in einer Längserstreckung der Fahrbahn verändert werden.

Bei einem Ausführungsbeispiel der Erfindung ist vorgesehen, dass die Schwenkhebevorrichtung in Längserstreckung der Fahrbahn im Wesentlichen vollständig auf einer der dem Bereich der Fahrbahn zur Abstützung einer anderen Achse des mehrspurigen Fahrzeugs abgewandten Seite der Radabstützung angeordnet ist. In anderen Worten gesagt, kann die Schwenkhebevorrichtung außerhalb des Bereichs der Fahrbahn angeordnet sein, der für die Abstützung der Räder des zu stapelnden Fahrzeugs auf der Fahrbahn vorgesehen ist. Für ein zu stapelndes Fahrzeug kann dies bedeuten, dass die Schwenkhebevorrichtung und die Verstellvorrichtung im Wesentlichen vollständig außerhalb der Radbasis (also nicht zwischen den Radachsen) angeordnet sind.

Bei einem Ausführungsbeispiel der Erfindung ist vorgesehen, dass die Stapelvorrichtung eine Radabstützung zur Abstützung der Räder nur einer Achse eines mehrspurigen Fahrzeuges aufweist und die Räder einer anderen Achse des mehrspurigen Fahrzeuges auf einem Teil der Fahrbahn oberhalb des Radhauses des Fahrzeugtransporters aufstellbar sind. Durch eine solche Anordnung der Stapelvorrichtung kann sich eine Ladeposition für ein zu stapelndes des Fahrzeug ergeben, bei welcher zumindest ein Teil des Fahrzeugs oberhalb des Radhauses des Fahrzeugtransporters stapelbar ist. Die Stapelvorrichtung kann bei einer solchen Anordnung benachbart zum Radhaus angeordnet sein. Die Aufnahmeposition und Ablageposition der Radabstützung können in einem Bereich der Fahrbahn oberhalb des Radhauses angeordnet sein. Der Bereich der Fahrbahn oberhalb des Radhauses kann gegenüber dem Bereich der Fahrbahn, an welchem die an der Fahrbahn gelagerten Schwenkpunkte der Schwenkhebevorrichtung angeordnet sind, erhöht sein.

Ausführungsbeispiele der Erfindung werden anhand der Figuren diskutiert. Es zeigen:
- Fig. 1a-c: eine mögliche Konstruktion der Stapelvorrichtung eines erfindungsgemäßen Fahrzeugtransporters mittels einfacher geometrischer Mittel
- Fig. 2a,b: ein Ausführungsbeispiel eines erfindungsgemäßen Fahrzeugtransporters in isometrischer Darstellung und in Seitenansicht mit der Radabstützung in Ablageposition
- Fig. 3a-c: eine Detailansicht zur Fig. 2 in isometrischer Darstellung, einer Seitenansicht und einer Draufsicht
- Fig. 4a,b: eine Detailansicht analog zur Fig. 3 aber in Aufnahmeposition der Radabstützung mit einem zu stapelnden Fahrzeug
- Fig. 5a,b: eine Detailansicht analog zur Fig. 4 aber in einer Ladeposition unterhalb der Hubhöhe der Radabstützung
- Fig. 6a,b: eine Detailansicht analog zur Fig. 5 aber in einer Ladeposition bei der Hubhöhe der Radabstützung
- Fig. 7a,b: eine Detailansicht wie in Fig. 6a,b, allerdings ohne Fahrzeug
- Fig. 8a,b: eine Detailansicht analog zu Figur 7a,b, aber mit mittels der Verstellvorrichtung positionierter Radabstützung
- Fig. 9a,b: ein auf einem Fahrzeugtransporter mittels der Stapelvorrichtung gestapeltes Fahrzeug in isometrischer Darstellung und in Seitenansicht
- Fig. 10: eine Ausführung einer Stapelvorrichtung mit längenveränderbarem Hubarm und Koppelarm

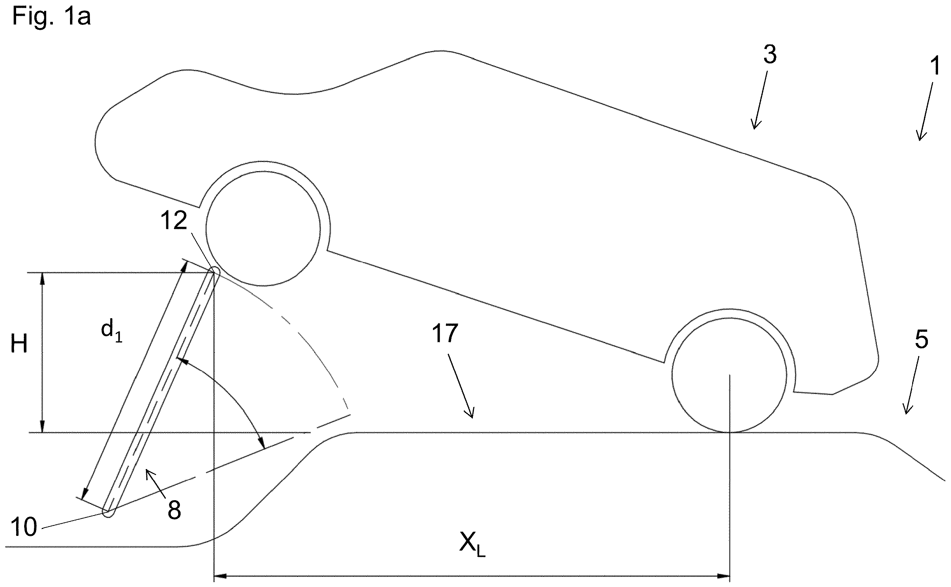

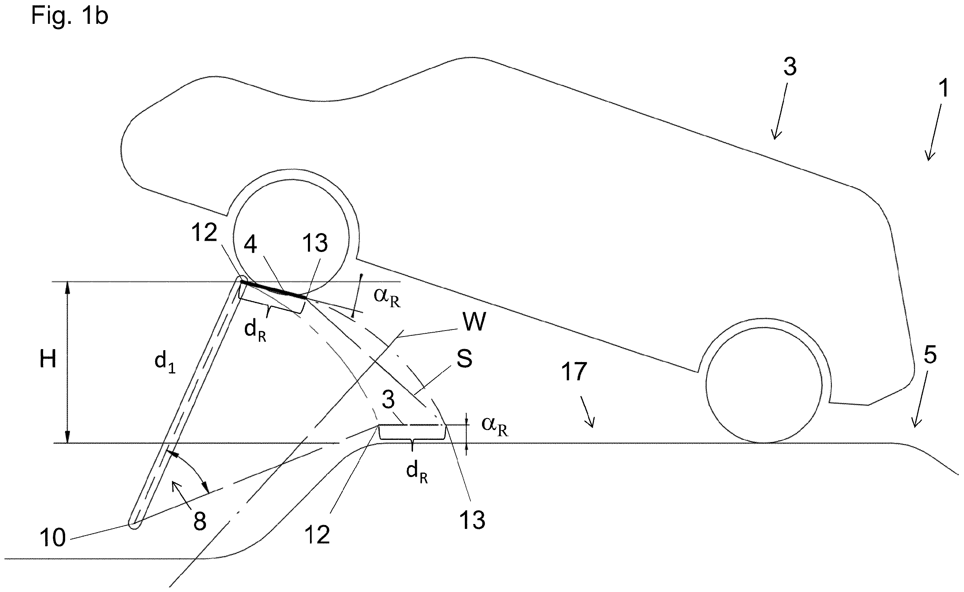

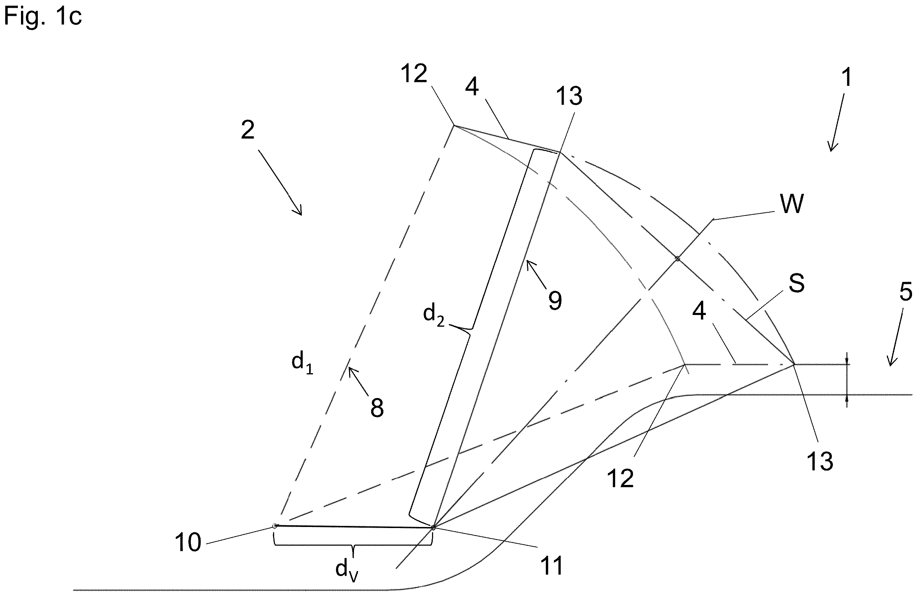

Fig. 1 zeigt eine mögliche Konstruktion der Stapelvorrichtung 2 eines erfindungsgemäßen Fahrzeugtransporters 1 mittels einfacher geometrischer Mittel:
Man wählt eine gewünschte Hubhöhe H, eine gewünschte Position X_{L} der Radabstützung 4 in einer Längserstreckung der Fahrbahn 5 relativ zur Fahrbahn 5 (der Nullpunkt kann beispielsweise bei einer gewünschten Positionierung der Räder der Hinterachse des zu stapelnden Fahrzeugs 3 gewählt werden) in der Hubhöhe H und eine gewünschte Position des Schwenkpunkts 10 des Hubarms 8 an der Fahrbahn 5. Daraus ergibt sich der direkte Abstand d₁ zwischen den mittels des Hubarms 8 miteinander verbundenen Schwenkpunkten 10, 12 (Fig. 1a).

Nunmehr zeichnet man weiters ein gewünschtes Ausmaß für die Kippbewegung der Radabstützung 4 in Form des Winkels α_{R} zwischen Fahrbahn 5 und Radabstützung 4 durch den Schwenkpunkt 12 bei der Hubhöhe H ein. Dasselbe führt man für den Schwenkpunkt 12 in der Ablageposition (z. B. bei α_{R} = 0) der Radabstützung 4 durch und erhält eine weitere Gerade. An beiden Geraden wird vom Schwenkpunkt 12 der direkte Abstand d_{R} abgeschlagen und man erhält so die Lage des Schwenkpunkts 13 in der Hubhöhe H und der Ablageposition. Die Winkelsymmetrale W zu der durch die Schwenkpunkte 13 in den zwei eingezeichneten Schwenkstellungen verlaufende Sehne S ergibt einen Strahl (vgl. Fig. 1b,c), auf welchem der Schwenkpunkt 11 des Koppelarms 9 liegen muss. Entsprechend den baulichen Gegebenheiten kann nunmehr der Abstand dv gewählt werden und es ergibt sich der direkte Abstand d₂ (Fig. 1b). Diese letzte Überlegung kann natürlich auch umgekehrt durchgeführt werden, d. h. man gibt d₂ vor und erhält dv.

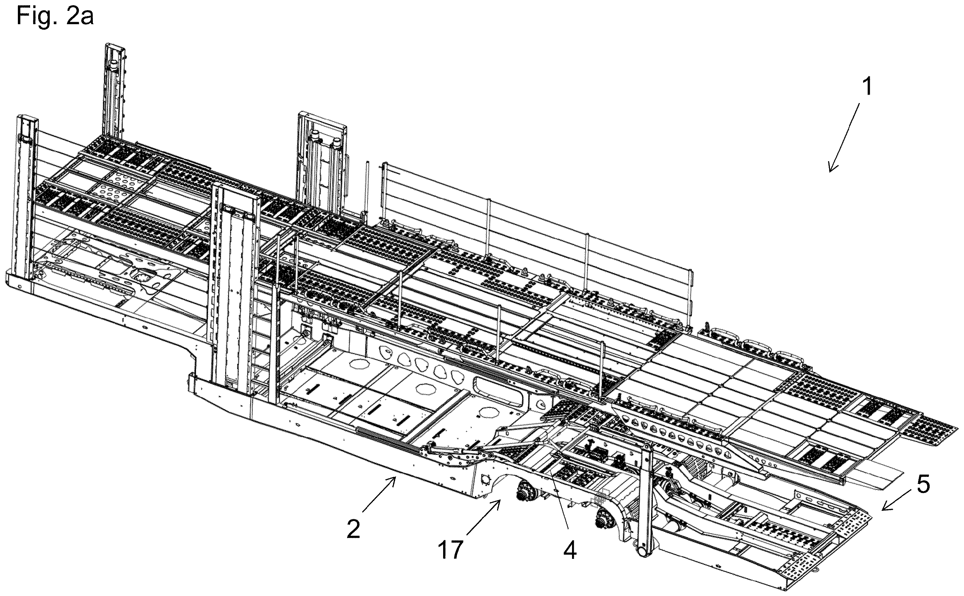

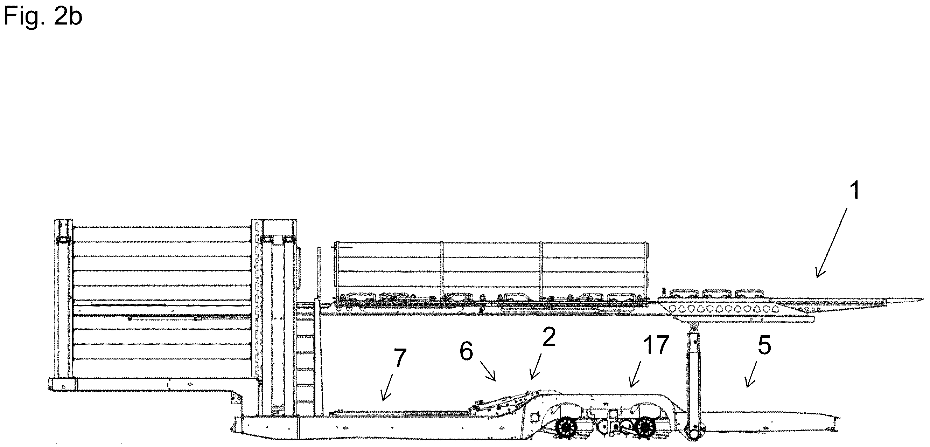

Die Fig. 2 bis 10 zeigen ein gemäß dem Konstruktionsprinzip der Fig. 1 konstruiertes Ausführungsbeispiel der Erfindung.

Figur 2a zeigt eine perspektivische Ansicht eines Fahrzeugtransporters 1 mit zwei Ladeebenen, wobei an der unteren Ladeebene an der Fahrbahn 5 benachbart zum Radhaus 17 eine Stapelvorrichtung 2 angeordnet ist. Die Radabstützung 4 der Stapelvorrichtung 2 befindet sich in Figur 2a in der Ablageposition, d.h. für die gezeigte Ausführung des Fahrzeugtransporters 1 dass die Radabstützung 3 auf dem Bereich der Fahrbahn 5 oberhalb des Radhauses 17 aufliegt.

Figur 2b zeigt eine Seitenansicht zur Figur 2a. Von der Stapelvorrichtung 2 sind die Schwenkhebevorrichtung 6 und die Verstellvorrichtung 7 erkennbar.

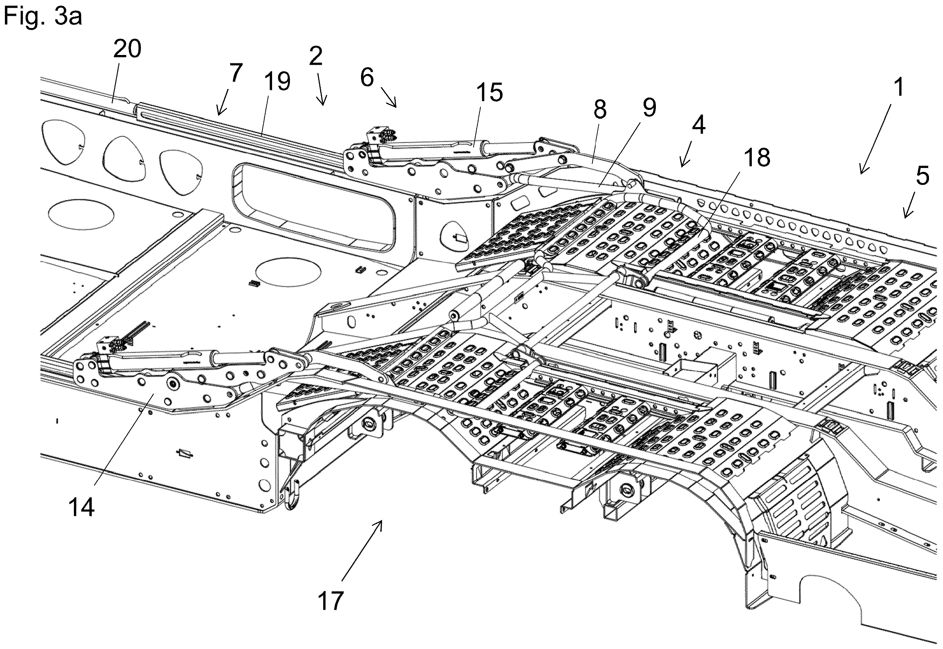

Figur 3a zeigt eine perspektivische Detailansicht einer Ausführung einer an einer Fahrbahn 5 eines Fahrzeugtransporters 1 angeordneten Stapelvorrichtung 2. Die gezeigte Stapelvorrichtung 2 weist an beiden Seiten der Fahrbahn 5 jeweils eine Schwenkhebevorrichtung 6 und eine Verstellvorrichtung 7 auf. Die Stellvorrichtung 6 weist an einem durch die Verstellvorrichtung 7 in Längsrichtung der Fahrbahn 5 verstellbaren Schlitten 14 auf, an welchem ein Hubarm 8 und ein Koppelarm 9 jeweils an einem ersten Ende schwenkbar gelagert sind. An einem zweiten Ende ist am Hubarm 8 und am Koppelarm 9 eine Radabstützung 4 schwenkbar gelagert. Die Radabstützung 4 ist in der gezeigten Ausführung in Form einer rahmenförmigen Radbrille 18 ausgeführt. Der Schlitten 14 der Verstärkerrichtung 7 ist in einer an der Fahrbahn 5 angeordneten Führung 19 gelagert und kann durch eine hier als Hydraulikzylinder ausgeführte Antriebsvorrichtung 20 entlang der Führung 19 bewegt werden. Wie dargestellt befindet sich die Radabstützung 4 der Stapelvorrichtung 2 in einer Ablageposition, in welcher die Radabstützung an der Fahrbahn 5 aufliegt. Die Ablageposition befindet sich wie dargestellt in einem Bereich der Fahrbahn 5 oberhalb des Radhauses 17. Zum Verschwenken des Hubarms 8 ist zwischen dem Hubarm 8 und dem Schlitten 14 der Verstellvorrichtung 7 eine hier als Hydraulikzylinder ausgeführte Bewegungsvorrichtung 15 angeordnet. Es ist deutlich erkennbar, dass die als Radbrille 18 ausgeführte Radabstützung 4 in der Ablageposition von den Rädern eines am Fahrzeugtransporter 1 zu ladenden Fahrzeugs unmittelbar überfahrbar ist.

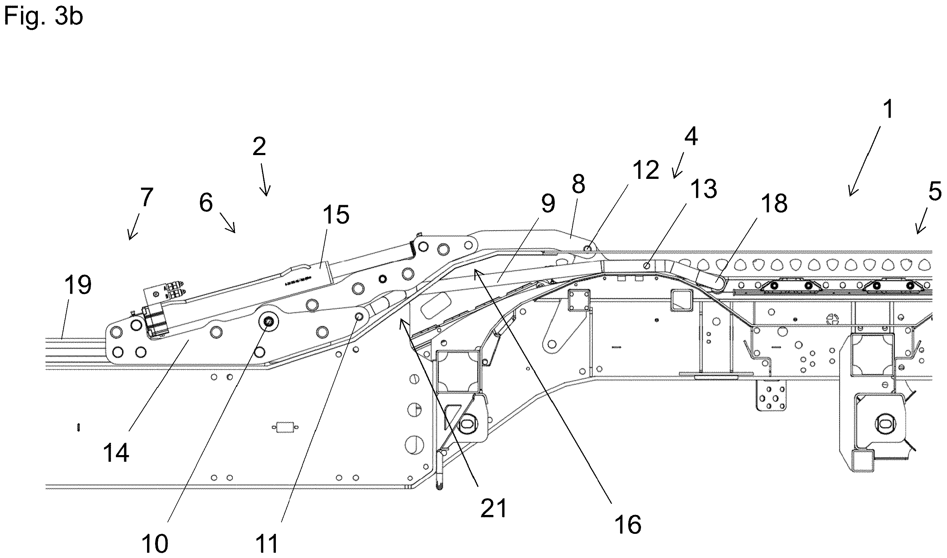

In Figur 3b ist eine Seitenansicht der Figur 3a gezeigt. Dabei ist erkennbar, dass der Hubarm 8 an einem Schwenkpunkt 10 am Schlitten 14 und an einem Schwenkpunkt 12 an der Radabstützung 4 gelagert ist. Weiter ist erkennbar, dass der Koppelarm 9 an einem Schwenkpunkt 11 am Schlitten 14 und an einem Schwenkpunkt 13 an der Radabstützung 4 gelagert ist. Wie dargestellt. befindet sich der Schwenkpunkt 11 relativ zur Fahrbahn 5 oberhalb des Schwenkpunkts 10. In der gezeigten Ausführung weist der Hubarm 8 eine Kröpfung 16 auf. Auch der Koppelarm 9 weist eine Kröpfung 21 auf. Die Kröpfung 16 des Hubarms 8 und die Kröpfung 21 des Koppelarms 9 sind für eine Ablageposition des Hubarms 8 und des Koppelarms 9 im Bereich des Radhauses 17 des Fahrzeugtransporters 1 an die Kontur des Radhauses 17 angepasst.

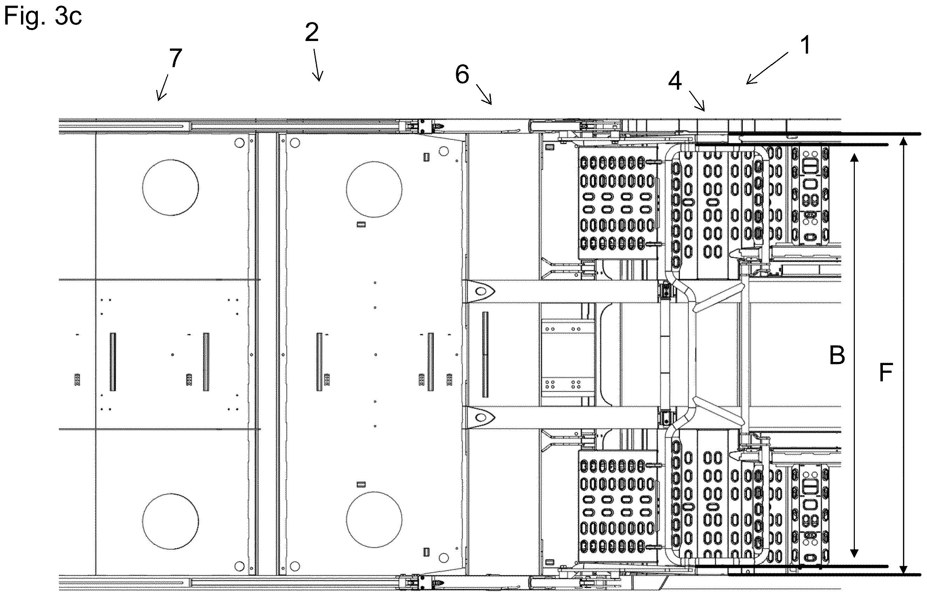

In Figur 3c ist eine Draufsicht zu den Figuren 3a und 3b gezeigt. Bei dem gezeigten Ausführungsbeispiel sind die Schwenkhebevorrichtung 6 und die Verstellvorrichtung 7 der Stapelvorrichtung 2 außerhalb der Breite B des Abstützbereichs der Radabstützung 4 am Fahrzeugtransporter 1 angeordnet. Vor und hinter der Radabstützung 4 ist die Fahrbahn in Längsrichtung somit frei von störenden Teilen. Die Schwenkhebevorrichtung 6 und die Verstellvorrichtung 7 sind wie dargestellt außerhalb der befahrbaren Breite F der Fahrbahn des Fahrzeugtransporters angeordnet.

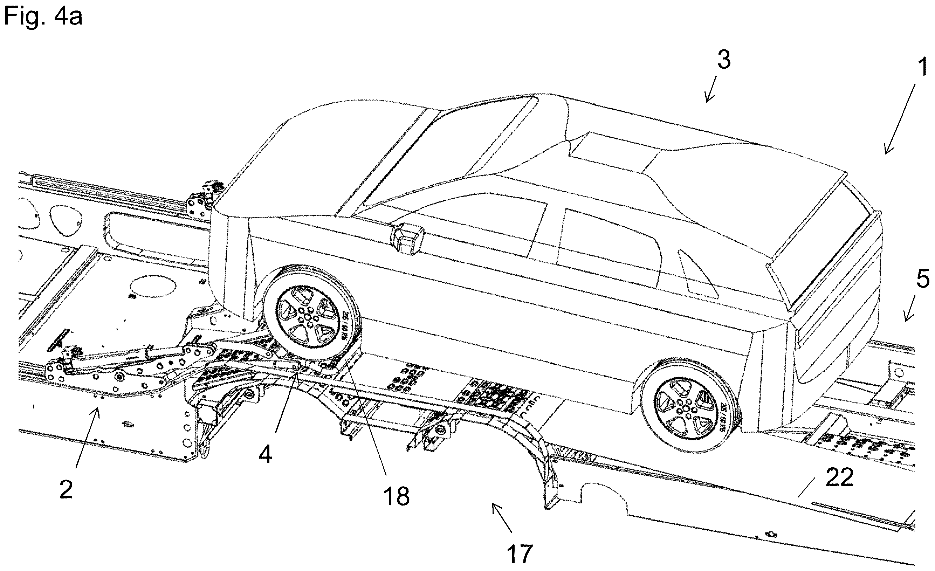

In Figur 4a ist eine perspektivische Ansicht eines auf dem Fahrzeugtransporter 1 zu stapelnden Fahrzeugs 3 gezeigt, wobei sich das mehrspurige Fahrzeug 3 nur mit den Rädern einer Achse über der Radabstützung 4 befindet. Um in diese Position zu gelangen, ist das Fahrzeug 3 über eine zusätzlich auf der Fahrbahn 5 anordenbare Rampe 22 auf den Bereich der Fahrbahn 5 oberhalb des Radhauses 17, zu welchem in der gezeigten Ausführung benachbart die Stapelvorrichtung 2 angeordnet ist, aufgefahren.

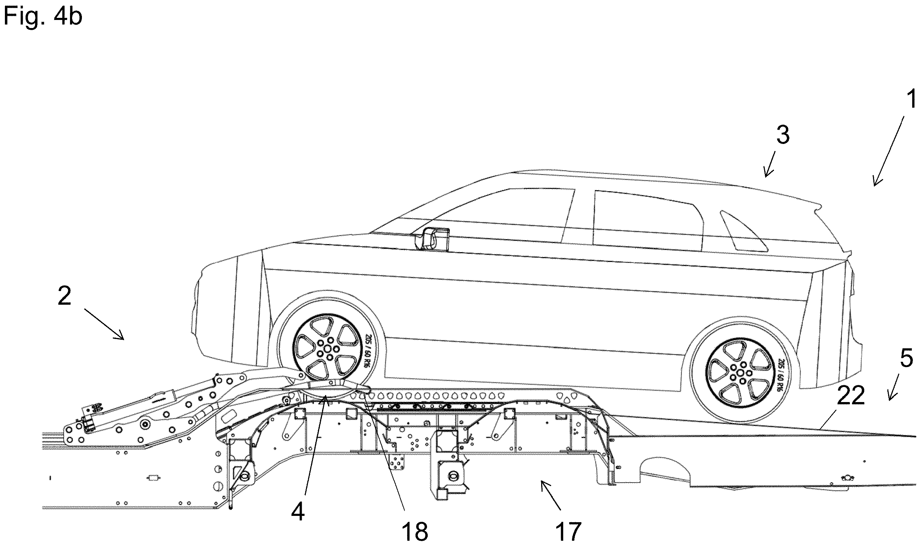

In Figur 4b ist eine Seitenansicht zur Figur 4a gezeigt, wobei zu erkennen ist, dass sich die Radabstützung 4 in einer Aufnahmeposition befindet. In der Aufnahmeposition ist die Radabstützung 4 gegenüber der Ablageposition leicht angehoben, sodass die über der Radabstützung 4 abgestellten Räder des Fahrzeugs 3 vom Rahmen der Radbrille 18 kontaktiert werden. In der Aufnahmeposition der Radabstützung 4 kann gegebenenfalls ein Verzurren der abgestellten Räder an der Radabstützung 4 erfolgen.

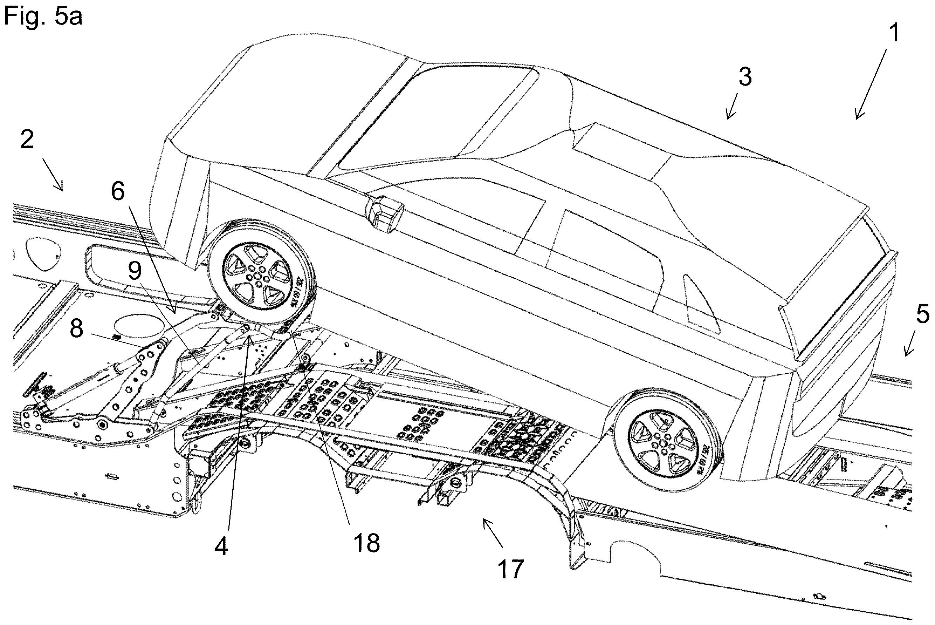

In Figur 5a ist eine perspektivische Ansicht eines unterhalb der maximalen Hubhöhe angehobenen Fahrzeugs 3 gezeigt, wobei die Räder einer Achse des Fahrzeugs 3 auf der Radabstützung 4 der Stapelvorrichtung 2 abgestellt sind. Das Anheben des Fahrzeugs 3 ist durch ein Verschwenken des Hubarms 8 der Schwenkhebevorrichtung 6 erfolgt, wobei Radabstützung 4 durch den Koppelarm 9 eine zwangsgeführte Kippbewegung relativ zum Hubarm 8 ausgeführt hat. Dadurch ist eine unerwünschte Verdrehung der auf der Radabstützung 4 abgestürzten Räder des Fahrzeugs 3 vermieden worden.

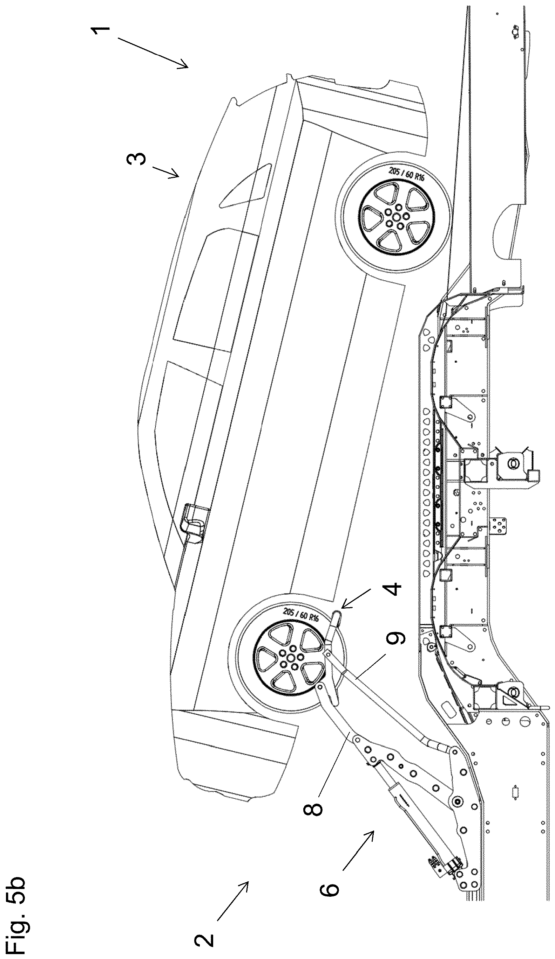

In Figur 5b ist eine Seitenansicht zur Figur 5a gezeigt, wobei die Kippbewegung der Radabstützung 4 deutlich aus einem Vergleich mit der Figur 4b erkennbar ist.

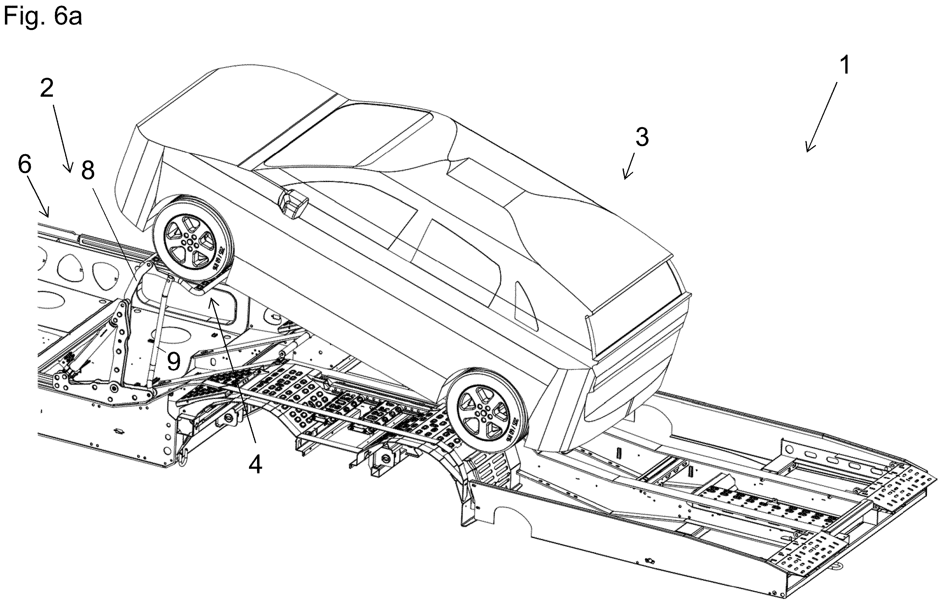

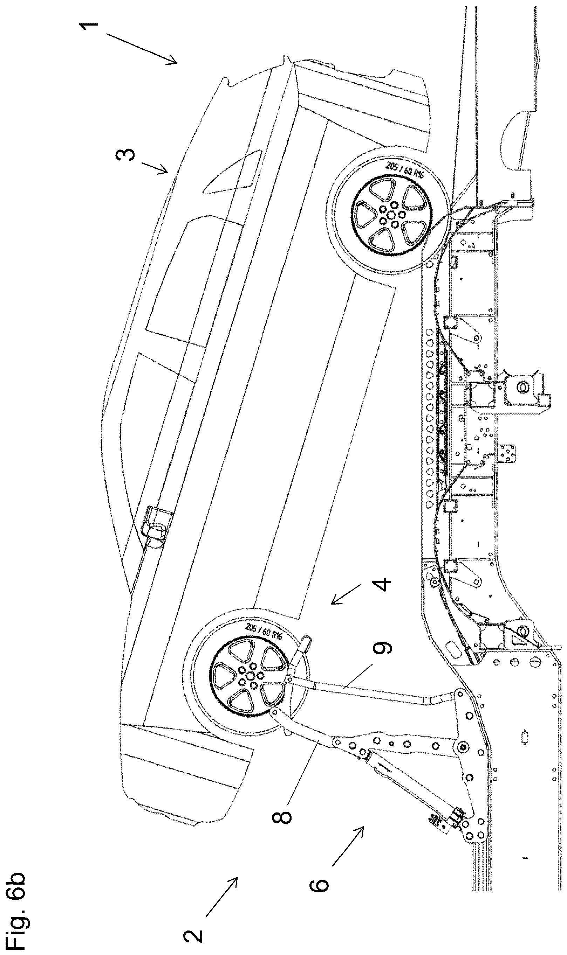

In den Figuren 6a und 6b sind eine perspektivische Ansicht und eine Seitenansicht eines auf die maximale Hubhöhe angehobenen Fahrzeugs 3 gezeigt. Das Anheben des Fahrzeugs 3 auf die maximale Hubhöhe ist durch ein im Vergleich zur Figur 5a weiteres Verschwenken des Hubarms 8 der Schwenkhebevorrichtung 6 erfolgt, wobei Radabstützung 4 durch den Koppelarm 9 weiter eine zwangsgeführte Kippbewegung relativ zum Hubarm 8 ausgeführt hat. Dadurch ist eine unerwünschte Verdrehung der auf der Radabstützung 4 abgestürzten Räder des Fahrzeugs 3 vermieden worden.

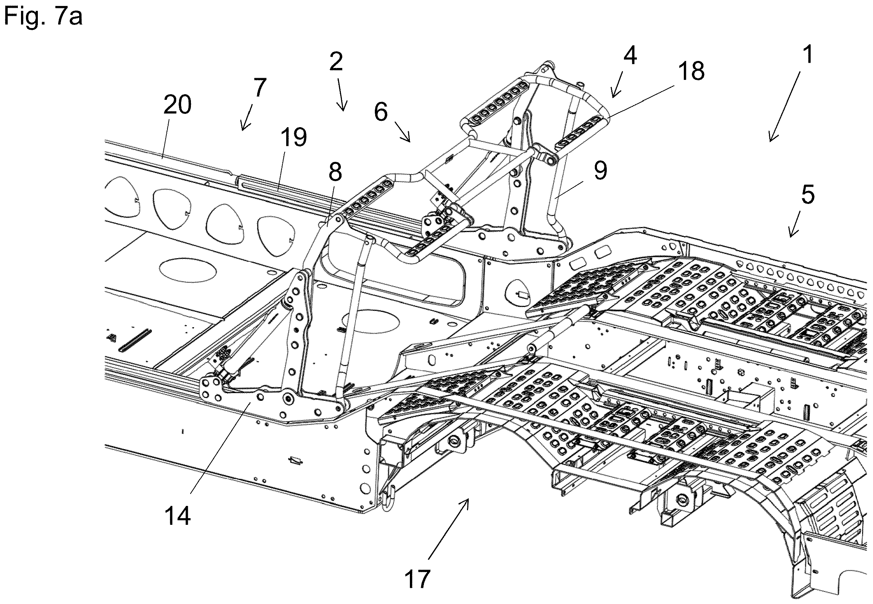

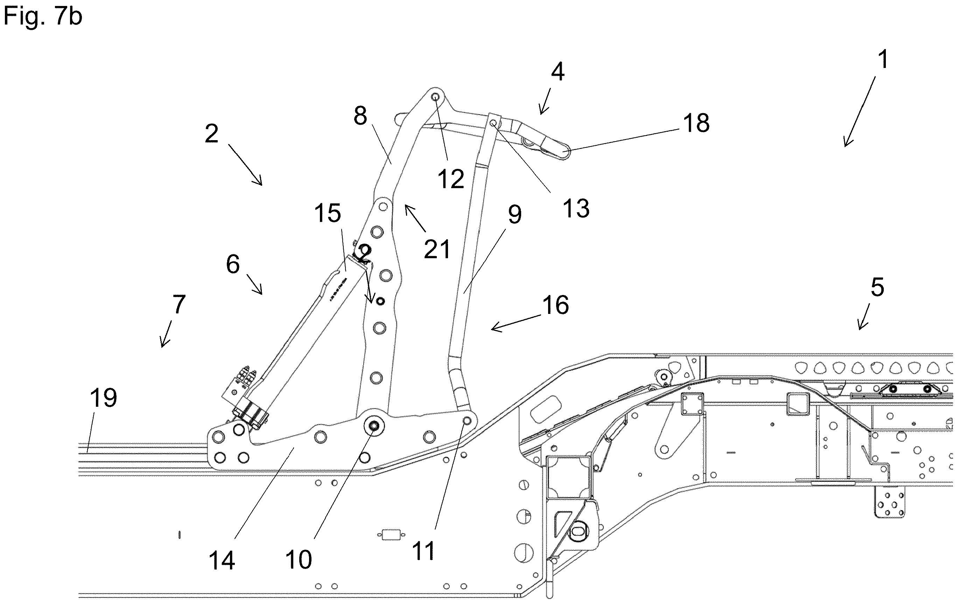

Die Figuren 7a und 7b zeigen analog zu den Figuren 3a und 3b eine perspektivische Detailansicht und eine Seitenansicht der Stapelvorrichtung 2, wobei sich wie dargestellt die Radabstützung 4 der Stapelvorrichtung 2 in einer auf die maximale Hubhöhe angehobene Position befindet. Es ist deutlich erkennbar, dass die als Radbrille 18 ausgeführte Radabstützung 4 in der angehobenen Position eine zwangsgeführte, gegensinnig zum Verschwenken des Hubarms 8 verlaufende Kippbewegung durchgeführt hat.

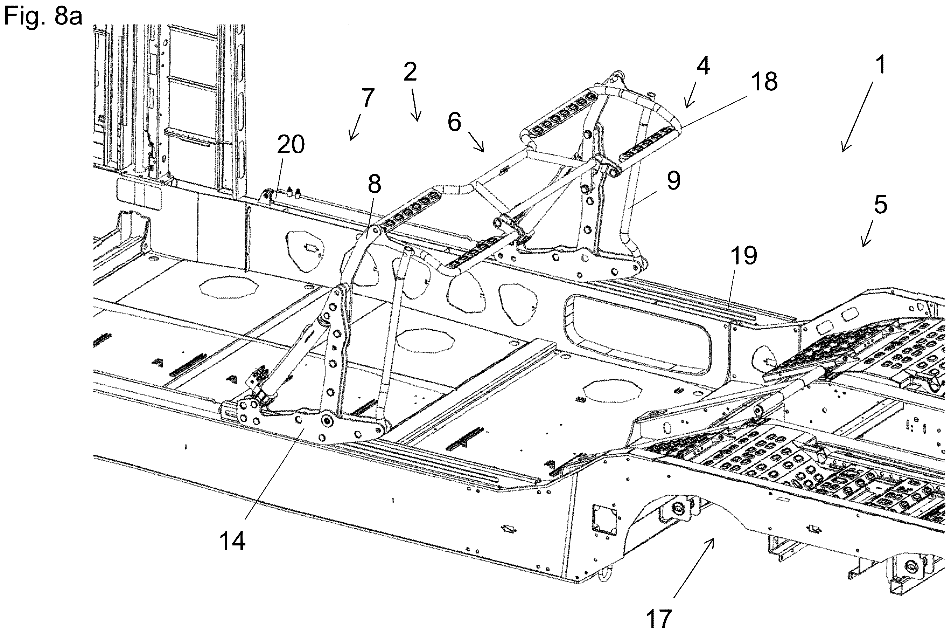

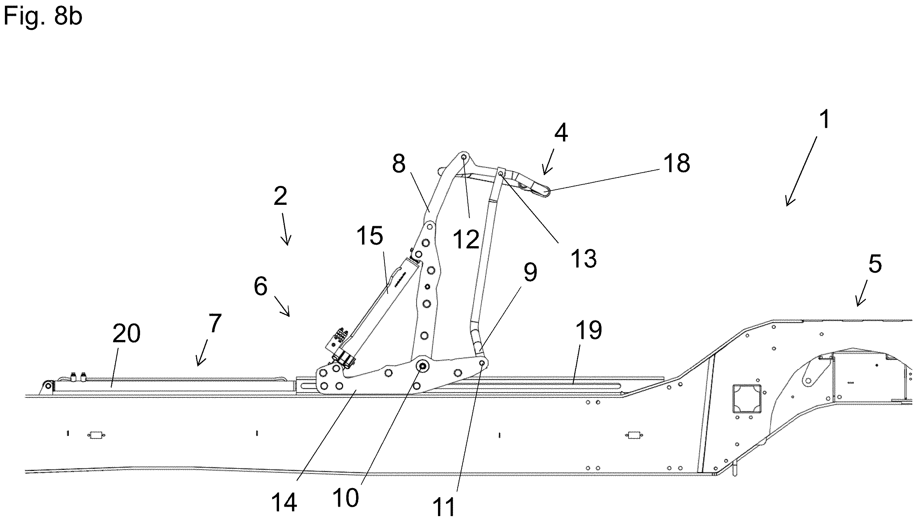

Die Figuren 8a und 8b zeigen analog zu den Figuren 7a und 7b eine perspektivische Detailansicht und eine Seitenansicht der Stapelvorrichtung 2, wobei die Längsposition der Radabstützung 4 relativ zur Fahrbahn 5 verstellt wurde. Dies ist durch ein Verfahren des Schlittens 14, an welchem die Schwenkpunkte 10,11 sowie die Bewegungsvorrichtung 15 angeordnet sind, erfolgt. Es ist deutlich erkennbar, dass eine Verstellung der Längsposition der Radabstützung 4 unabhängig von der Schwenkstellung der Schwenkhebevorrichtung 6 erfolgen kann.

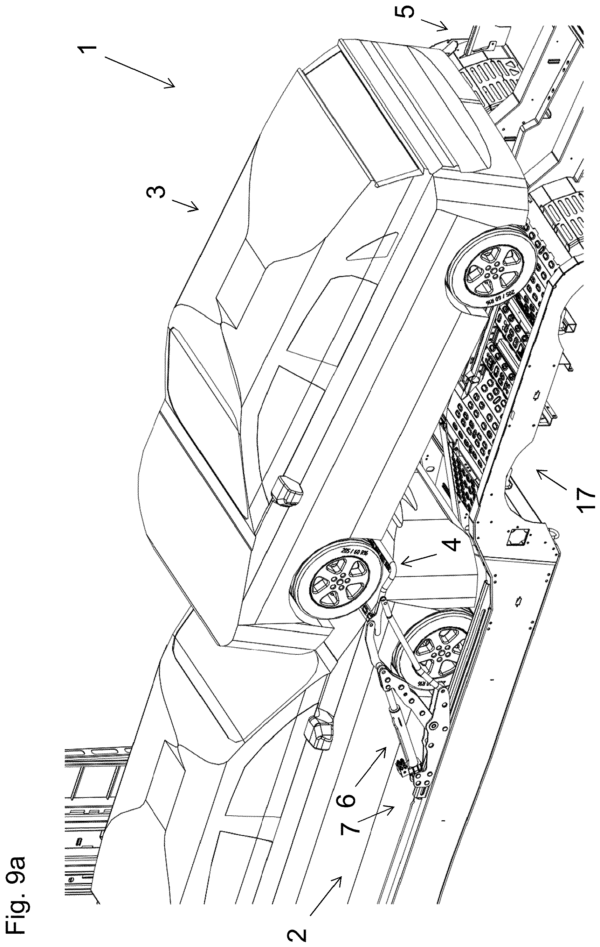

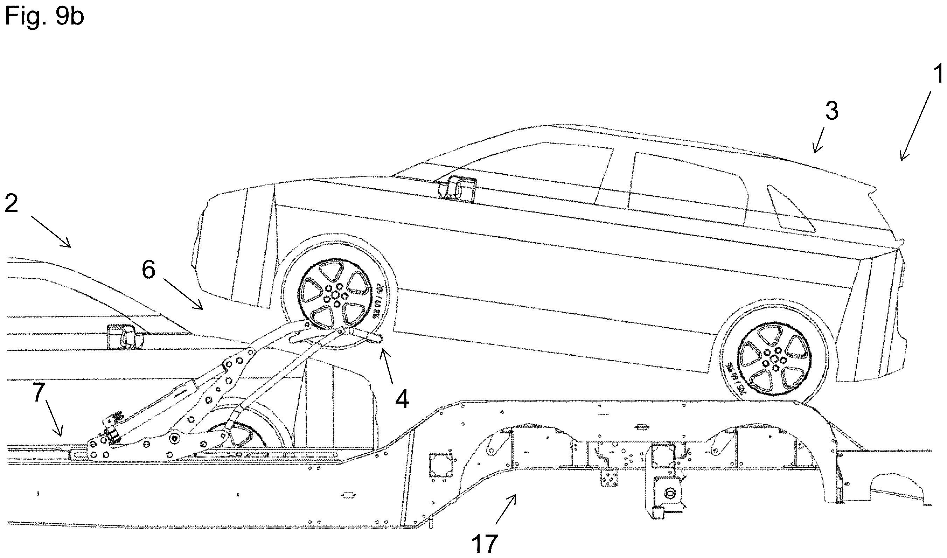

In den Figuren 9a und 9b sind eine perspektivische und eine Seitenansicht eines mittels der Stapelvorrichtung 2 auf einem Fahrzeugtransporter 1 gestapelten Fahrzeugs 3 gezeigt. Die Radabstützung 4 der Schwenkhebevorrichtung 6 befindet sich wie in der Figur 5a auf einer Hubhöhe unterhalb der maximal möglichen Hubhöhe. Die in den Figuren 9a und 9b gezeigte Längsposition der Radabstützung 4 kann ausgehend von der in den Figuren 5a und 5b durch eine Längspositionierung der Radabstützung 4 relativ zur Fahrbahn 5 durch die Verstellvorrichtung 7 erfolgen. Ein Längsversatz des mittels der Stapelvorrichtung 2 gestapelten Fahrzeugs 3 kann durch die Verstellvorrichtung 7 unabhängig vom Antrieb des Fahrzeugs 3 erfolgen. In der dargestellten Ladeposition des Fahrzeugs 3 sind die Räder nur einer Achse des mehrspurigen Fahrzeuges auf der Radabstützung 4 der Stapelvorrichtung 2 abgestellt und die Räder einer anderen Achse des mehrspurigen Fahrzeuges 3 auf der Fahrbahn 5 des Fahrzeugtransporters 1 aufgestellt. Der Bereich der Fahrbahn 5, auf welcher die Räder der anderen Achse des Fahrzeugs 3 aufgestellt sind, befindet sich oberhalb des Radhauses 17, zu welchem in der gezeigten Ausführung benachbart die Stapelvorrichtung 2 angeordnet ist. Durch die Anordnung der Verstellvorrichtung 7 und der Schwenkhebevorrichtung 6 außerhalb der Breite B des Abstützbereichs der Radabstützung 4 kann sich sowohl der der Bereich zwischen der Fahrbahn 5 und der Radabstützung 4 als auch der Bereich in Längsrichtung der Fahrbahn 5 vor und hinter der Radabstützung 4 als Laderaum nutzen lassen kann.

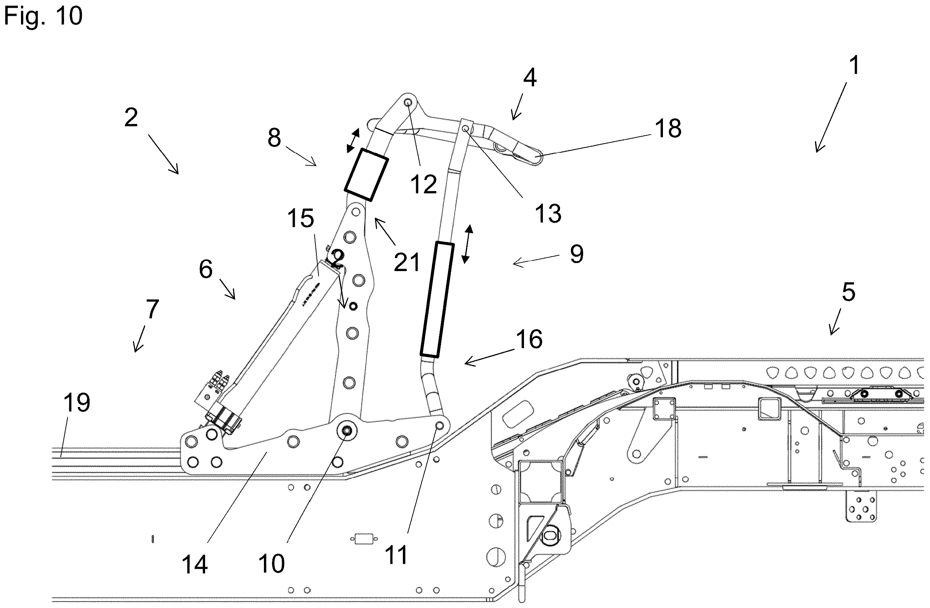

In Figur 10 ist eine Ausführung einer Stapelvorrichtung 2 analog zur Ausführung der Figur 7a gezeigt, wobei die hier gezeigte Stapelvorrichtung 2 eine Schwenkhebevorrichtung 6 mit längenveränderbar ausgebildeten Koppelarmen 9 und Hubarmen 8 aufweist.

### Bezugszeichenliste:

- 1: Fahrzeugtransporter
- 2: Stapelvorrichtung
- 3: Fahrzeug
- 4: Radabstützung
- 5: Fahrbahn des Fahrzeugtransporters
- 6: Schwenkhebevorrichtung
- 7: Verstellvorrichtung
- 8: Hubarm
- 9: Koppelarm
- 10: Schwenkpunkt
- 11: Schwenkpunkt
- 12: Schwenkpunkt
- 13: Schwenkpunkt
- 14: Schlitten
- 15: Bewegungsvorrichtung für Hubarm
- 16: Kröpfung des Hubarms
- 17: Radhaus
- 18: Radbrille
- 19: Führung
- 20: Antriebsvorrichtung
- 21: Kröpfung
- 22: Rampe

- B: Breite des Abstützbereichs der Radabstützung
- F: Breite der Fahrbahn
- W: Winkelsymmetrale
- S: Sehne
- X_{L}: gewünschte Position
- d₁: Abstand der mittels des Hubarms miteinander verbundenen Schwenkpunkte
- d₂: Abstand der mittels des Koppelarms miteinander verbundenen Schwenkpunkte
- d_{V}: Abstand der Schwenkpunkte an der Verstellvorrichtung
- d_{R}: Abstand der Schwenkpunkte an der Radabstützung
- α_{R}: Winkel zwischen Fahrbahn und Radabstützung

## Patentansprüche

1. Fahrzeugtransporter (1), mit einer Stapelvorrichtung (2) zum Stapeln eines Fahrzeugs (3) auf dem Fahrzeugtransporter (1), wobei die Stapelvorrichtung (2) eine Radabstützung (4) zur Abstützung der Räder nur einer Achse eines mehrspurigen Fahrzeuges (3) aufweist und Räder einer anderen Achse des mehrspurigen Fahrzeuges (3) auf einer Fahrbahn (5) des Fahrzeugtransporters (1) aufstellbar sind, wobei die Radabstützung (4) quer zu einer Breite der Fahrbahn (5) einen Abstützbereich aufweist und wobei die Stapelvorrichtung (2) eine Schwenkhebevorrichtung (6) zum Heben und Senken der Radabstützung (4) relativ zur Fahrbahn (5) mittels einer Schwenkbewegung aufweist,
**dadurch gekennzeichnet, dass**
die Schwenkhebevorrichtung (6) einen Hubarm (8) und einen Koppelarm (9) aufweist, welche einerseits an der Fahrbahn (5) und andererseits an der Radabstützung (4) an in Form eines Gelenk-Vierecks angeordneten Schwenkpunkten (10, 11, 12, 13) schwenkbar gelagert sind, sodass die Radabstützung (4) eine von der Schwenkbewegung der Schwenkhebevorrichtung (6) abweichende Kippbewegung relativ zur Fahrbahn (5) des Fahrzeugtransporters (1) durchführt.

2. Fahrzeugtransporter nach dem vorangehenden Anspruch, wobei die an der Fahrbahn (5) gelagerten Schwenkpunkte (10, 11) in unterschiedlicher Höhe relativ zur Fahrbahn (5) angeordnet sind.

3. Fahrzeugtransporter nach wenigstens einem der vorangehenden Ansprüche, wobei die Stapelvorrichtung (2) eine Verstellvorrichtung (7) zum Längspositionieren der Radabstützung (4) relativ zur Fahrbahn (5) des Fahrzeugtransporters (1) aufweist und wobei die an der Fahrbahn (5) gelagerten Schwenkpunkte (10, 11) der Schwenkhebevorrichtung (6) an der Verstellvorrichtung (7) angeordnet und so über die Verstellvorrichtung (7) an der Fahrbahn (5) gelagert sind.

4. Fahrzeugtransporter nach dem vorangehenden Anspruch, wobei die Verstellvorrichtung (7) außerhalb der Breite (B) des Abstützbereichs der Radabstützung (4) am Fahrzeugtransporter (1) angeordnet ist.

5. Fahrzeugtransporter nach einem der beiden vorangehenden Ansprüche, wobei die Verstellvorrichtung (7) einen durch eine Antriebsvorrichtung (20) bewegbaren Schlitten (14) aufweist, an welchem die an der Fahrbahn (5) gelagerten Schwenkpunkte (10, 11) der Schwenkhebevorrichtung (6) angeordnet sind.

6. Fahrzeugtransporter nach einem der Ansprüche 3 bis 5, wobei die Verstellvorrichtung (7) zum Längspositionieren der Radabstützung (4) getrennt von der Schwenkhebevorrichtung (6) zum Heben und Senken der Radabstützung (4) betätigbar ist.

7. Fahrzeugtransporter nach einem der Ansprüche 3 bis 6, wobei die Verstellvorrichtung (7) eine Bewegungsvorrichtung (15) für den Hubarm (8) aufweist, welche bevorzugt am Schlitten (14) gelagert ist.

8. Fahrzeugtransporter nach wenigstens einem der vorangehenden Ansprüche, wobei die Schwenkhebevorrichtung (6) und ggf. die Verstellvorrichtung (7) außerhalb der Breite (B) des Abstützbereichs der Radabstützung (4) am Fahrzeugtransporter (1) angeordnet sind, wobei bevorzugt vorgesehen ist, dass an beiden Seiten des Fahrzeugtransporters (1) jeweils eine Schwenkhebevorrichtung (6) und ggf. eine Verstellvorrichtung (7) angeordnet sind, welche über die Radabstützung (4) mechanisch miteinander gekoppelt sind.

9. Fahrzeugtransporter nach wenigstens einem der vorangehenden Ansprüche, wobei die Schwenkhebevorrichtung (6) in Längserstreckung der Fahrbahn (5) im Wesentlichen vollständig auf einer der dem Bereich der Fahrbahn (5) zur Abstützung einer anderen Achse des mehrspurigen Fahrzeugs (3) abgewandten Seite der Radabstützung (4) angeordnet ist.

10. Fahrzeugtransporter nach wenigstens einem der vorangehenden Ansprüche, wobei der Hubarm (8) eine Kröpfung (16) aufweist.

11. Fahrzeugtransporter nach wenigstens einem der vorangehenden Ansprüche, wobei der Koppelarm (9) und/oder der Hubarm (8) längenveränderbar ausgebildet sind bzw. ist, vorzugsweise in Form eines Hydraulikzylinders oder in Form eines Spindelantriebs.

12. Fahrzeugtransporter nach wenigstens einem der vorangehenden Ansprüche, wobei die Räder der anderen Achse des mehrspurigen Fahrzeuges (3) auf einem Teil der Fahrbahn (5) oberhalb des Radhauses (17) des Fahrzeugtransporters (1) aufstellbar sind.

## Claims

1. A vehicle transporter (1) having a stacking apparatus (2) for stacking a vehicle (3) on the vehicle transporter (1), wherein the stacking apparatus (2) has a wheel support (4) for supporting the wheels of only one axle of a multi-track vehicle (3) and wheels of another axle of the multi-track vehicle (3) can be placed on a deck (5) of the vehicle transporter (1), wherein the wheel support (5) has a support region transversely relative to a width of the deck (5) and wherein the stacking apparatus (2) has a pivoting lifting device (6) for lifting and lowering the wheel support (4) relative to the deck (5) by means of a pivotal movement,
**characterised in that**
the pivoting lifting device (6) has a lift arm (8) and a coupling arm (9) which are pivotably mounted on the one hand to the deck (5) and on the other hand to the wheel support (4) at pivot points (10, 11, 12, 13) arranged in the form of a four-bar linkage,
so that the wheel support (4) performs a tilting movement differing from the pivotal movement of the pivoting lifting device (6) relative to the deck (5) of the vehicle transporter (1).

2. A vehicle transporter according to the preceding claim wherein the pivot points (10, 11) mounted to the deck (5) are at a different height relative to the deck (5).

3. A vehicle transporter according to at least one of the preceding claims wherein the stacking apparatus (2) has an adjusting apparatus (7) for lengthwise positioning of the wheel support (4) relative to the deck (5) of the vehicle transporter (1) and wherein the pivot points (10, 11) of the pivoting lifting device (6), that are mounted to the deck (5), are arranged on the adjusting aparatus (7) and thus mounted on the deck (5) by way of the adjusting apparatus (7).

4. A vehicle transporter according to the preceding claim wherein the adjusting apparatus (7) is arranged on the vehicle transporter (1) outside the width (B) of the support region of the wheel support (4).

5. A vehicle transporter according to one of the two preceding claims wherein the adjusting apparatus (7) has a slide (14) which is moveable by a drive device (20) and on which the pivot points (10,11) of the pivoting lifting apparatus (6), that are mounted to the deck (5), are arranged.

6. A vehicle transporter according to one of claims 3 to 5 wherein the adjusting apparatus (7) for lengthwise positioning of the wheel support (4) is actuable separately from the pivoting lifting apparatus (6) for lifting and lowering the wheel support (4).

7. A vehicle transporter according to one of claims 3 to 6 wherein the adjusting apparatus (7) has a motion device (15) for the lift arm (8), that is preferably mounted on the slide (14).

8. A vehicle transporter according to at least one of the preceding claims wherein the pivoting lifting apparatus (6) and optionally the adjusting apparatus (7) are arranged outside the width (B) of the support region of the wheel support (4) on the vehicle transporter (1), wherein it is preferably provided that disposed at both sides of the vehicle transporter (1) is a respective pivoting lifting apparatus (6) and optionally an adjusting apparatus (7) which are mechanically coupled together by way of the wheel support (4).

9. A vehicle transporter according to at least one of the preceding claims wherein the pivoting lifting apparatus (6) is arranged substantially completely in the longitudinal extent of the deck (5) on a side of the wheel support (4), that faces away from the region of the deck for supporting another axle of the multi-track vehicle (3).

10. A vehicle transporter according to at least one of the preceding claims wherein the lift arm (8) has a crank offset (16).

11. A vehicle transporter according to at least one of the preceding claims wherein the coupling arm (9) and/or the lift arm (8) is or are adapted to be variable in length, preferably in the form of a hydraulic cylinder or in the form of a spindle drive.

12. A vehicle transporter according to at least one of the preceding claims wherein the wheels of the other axle of the multi-track vehicle (3) can be placed on a part of the deck (5) above the wheel arch (17) of the vehicle transporter (1).

## Revendications

1. Transporteur de véhicule (1), avec un dispositif d'empilage (2) pour empiler un véhicule (3) sur le transporteur de véhicule (1), dans lequel le dispositif d'empilage (2) présente un support de roues (4) pour le support des roues d'un seul essieu d'un véhicule (3) à plusieurs voies et des roues d'un autre essieu du véhicule (3) à plusieurs voies peuvent être placées sur un chemin de circulation (5) du transporteur de véhicule (1), dans lequel le support de roues (4) présente transversalement par rapport à une largeur du chemin de circulation (5) une zone de support et dans lequel le dispositif d'empilage (2) présente un dispositif de levage pivotant (6) pour lever et abaisser le support de roues (4) par rapport au chemin de circulation (5) au moyen d'un mouvement pivotant,
**caractérisé en ce que**
le dispositif de levage pivotant (6) présente un bras de levage (8) et un bras d'accouplement (9), lesquels sont montés d'une part sur le chemin de circulation (5) et d'autre part sur le support de roues (4) de manière à pouvoir pivoter en des points de pivotement (10, 11, 12, 13) disposés sous forme d'un quadrilatère articulé, de sorte que le support de roues (4) effectue un mouvement basculant différent du mouvement de pivotement du dispositif de levage pivotant (6) par rapport au chemin de circulation (5) du transporteur de véhicule (1).

2. Transporteur de véhicule selon la revendication précédente, dans lequel les points de pivotement (10, 11) montés sur le chemin de circulation (5) sont disposés à une hauteur différente par rapport au chemin de circulation (5).

3. Transporteur de véhicule selon au moins l'une des revendications précédentes, dans lequel le dispositif d'empilage (2) présente un dispositif de réglage (7) pour le positionnement longitudinal du support de roues (4) par rapport au chemin de circulation du transporteur de véhicule (1) et dans lequel les points de pivotement (10, 11) du dispositif de levage pivotant (6) montés sur le chemin de circulation (5) sont disposés sur le dispositif de réglage (7) et ainsi montés sur le chemin de circulation (5) par l'intermédiaire du dispositif de réglage (7).

4. Transporteur de véhicule selon la revendication précédente, dans lequel le dispositif de réglage (7) est disposé à l'extérieur de la largeur (B) de la zone de support du support de roues (4) sur le transporteur de véhicule (1).

5. Transporteur de véhicule selon l'une des deux revendications précédentes, dans lequel le dispositif de réglage (7) présente un chariot (14) pouvant être déplacé par un dispositif d'entraînement (20), sur lequel les points de pivotement (10, 11) du dispositif de levage pivotant (6) montés sur le chemin de circulation (5) sont disposés.

6. Transporteur de véhicule selon l'une quelconque des revendications 3 à 5, dans lequel le dispositif de réglage (7) pour le positionnement longitudinal du support de roues (4) peut être actionné séparément du dispositif de levage pivotant (6) pour le levage et l'abaissement du support de roues (4).

7. Transporteur de véhicule selon l'une quelconque des revendications 3 à 6, dans lequel le dispositif de réglage (7) présente un dispositif de déplacement (15) pour le bras de levage (8), lequel est monté de préférence sur le chariot (14).

8. Transporteur de véhicule selon au moins l'une des revendications précédentes, dans lequel le dispositif de levage pivotant (6) et le cas échéant le dispositif de réglage (7) sont disposés à l'extérieur de la largeur (B) de la zone de support du support de roues (4) sur le transporteur de véhicule (1), dans lequel il est prévu de préférence que respectivement un dispositif de levage pivotant (6) et le cas échéant un dispositif de réglage (7) soient disposés sur les deux côtés du transporteur de véhicule (1), lesquels peuvent être accouplés mécaniquement l'un à l'autre par l'intermédiaire du support de roues (4).

9. Transporteur de véhicule selon au moins l'une des revendications précédentes, dans lequel le dispositif de levage pivotant (6) est disposé dans l'étendue longitudinale du chemin de circulation (5) sensiblement entièrement sur un côté du support de roues (4) opposé à la zone du chemin de circulation (5) pour le support d'un autre essieu du véhicule (3) à plusieurs voies.

10. Transporteur de véhicule selon au moins l'une des revendications précédentes, dans lequel le bras de levage (8) présente un coude (16).

11. Transporteur de véhicule selon au moins l'une des revendications précédentes, dans lequel le bras d'accouplement (9) et/ou le bras de levage (8) est ou sont réalisés avec possibilité de modification de la longueur, de préférence sous forme d'un cylindre hydraulique ou sous forme d'un entraînement à broche.

12. Transporteur de véhicule selon au moins l'une des revendications précédentes, dans lequel les roues de l'autre essieu du véhicule (3) à plusieurs voies peuvent être posées sur une partie du chemin de circulation (5) au-dessus du passage de roue (17) du transporteur de véhicule (1).
